# FASCICULE DE BREVET EUROPEEN

(11) **EP 2 253 143 B1**
(45) Date de publication et mention de la délivrance du brevet: **04.11.2015**
(21) Numéro de dépôt: 08803824.5
(22) Date de dépôt: 08.09.2008
(51) Int. Cl.: H04N 21/25, H04N 21/4227, H04N 21/433, H04N 21/472, H04N 21/475, H04N 21/482, H04N 21/6543, H04N 21/84, H04N 5/76, G11B 27/034

(54) **SYSTÈME ET PROCÉDÉ DE PROGRAMMATION D'ENREGISTREURS VIDÉO**
SYSTEM UND VERFAHREN ZUM PROGRAMMIEREN VON VIDEORECORDERN
SYSTEM AND METHOD FOR PROGRAMMING VIDEO RECORDERS

(30) Priorité: 07.09.2007 CH 13962007
(43) Date de publication de la demande: 24.11.2010
(73) Titulaire: Getmore TV Sarl, 1822 Chernex (CH)
(72) Inventeur: POTESTA, Laurent, CH-Cernex 1822 (CH); STEFFEN, Florian, 1020 Renens (CH)
(74) Mandataire: P&TS SA (AG, Ltd.)
(86) Numéro de dépôt international: PCT/EP2008/061856
(87) Numéro de publication internationale: WO 2009/030775

(56) Documents cités:
- WO-A-01/47249
- WO-A-03/043322
- WO-A-2004/032511
- WO-A-2006/051492
- US-A1- 2003 204 848
- US-A1- 2005 149 987
- US-A1- 2006 174 277
- [Online] 14 juillet 2007 (2007-07-14), XP007903971 Extrait de l'Internet: URL:http://web.archive.org/web/20070714195 654/http://www3.tivo.com/tivo-tco/mix/inde x.do> [extrait le 2008-01-28]

## Description

### Domaine technique

La présente invention concerne un procédé de programmation à distance d'enregistreurs vidéo, ainsi qu'un serveur adapté à ce procédé.

### Etat de la technique

Il existe de nombreux appareils pour enregistrer des émissions de télévision afin de les regarder à un moment choisi. Les enregistreurs à cassette vidéo sont peut à peu remplacés par des enregistreurs sur disques optiques ou sur disque dur. D'autres supports d'enregistrement, y compris des systèmes permettant d'enregistrer sur un support distant, continuent d'être développés.

L'utilisateur qui souhaite enregistrer une émission doit introduire une commande à l'avance afin d'indiquer à l'enregistreur vidéo de commencer et d'interrompre l'enregistrement de la chaîne sélectionnée à l'heure désirée. Cette opération est nommée programmation. Différents procédés et dispositifs ont été développés et continuent d'être développés pour rendre cette opération aussi conviviale que possible.

Le nombre de chaînes de télévision à disposition des téléspectateurs tend cependant à augmenter rapidement, en sorte qu'il devient de plus en plus difficile de savoir quelle chaîne passe quelle émission à quel moment. Les chaînes disponibles dépendent en outre des câblo-opérateurs et des bouquets de chaînes abonnés par chaque téléspectateur. Les magazines de télévision imprimés sur papier, bien que devenant toujours plus épais, ne suffisent plus à présenter la diversité de l'offre disponible.

Afin de résoudre ce problème, on connaît aussi des guides programmes électronique EPG (electronic program guide). Les guides de programme électroniques permettent d'afficher plusieurs semaines à l'avance les émissions diffusées par plusieurs chaînes sur une ou plusieurs pages web accessibles depuis un navigateur Internet ou directement sur la télévision. Des outils de recherche et de classification facilitent la navigation et permettent à un téléspectateur de retrouver plus rapidement les émissions susceptibles de l'intéresser.

La demande de brevet WO0161997 décrit un système qui permet de programmer à distance un enregistreur vidéo programmable depuis n'importe quel navigateur WEB. Le téléspectateur qui souhaite programmer une émission la sélectionne depuis son navigateur à partir d'une liste de programme électronique. Le serveur qui affiche ce programme électronique EPG encode les instructions de programmation avec une identification du décodeur encapsulée dans le signal vidéo diffusé à tous les téléspectateurs. Un décodeur lié au récepteur de télévision chez le téléspectateur reçoit ces instructions, détecte qu'elles lui sont destinées, et exécute ces instructions. Une solution similaire est aussi décrite dans WO0140887.

Afin de faciliter encore la programmation d'émissions, la demande WO0147273 propose un système de recommandations automatique d'émissions basé sur des corrélations entre des profils d'utilisateurs et les caractéristiques de l'émission. Le téléspectateur est ainsi automatiquement informé des émissions susceptibles de l'intéresser. Il est cependant difficile de déterminer automatiquement et de manière fiable les préférences des téléspectateurs, surtout lorsque le choix d'émission est important.

WO2004032511 décrit un serveur de programmation permettant à un utilisateur de programmer à distance son enregistreur vidéo numérique, par exemple depuis un ordinateur connecté à Internet. Un utilisateur peut se connecter via Internet au serveur pour définir ses choix des programmations d'émission et les transférer ensuite à son enregistreur vidéo. Le système nécessite cependant que l'utilisateur se connecte au préalable au serveur, par exemple à l'aide d'un PC connecté à Internet, afin de sélectionner les émissions ou catégories d'émission qu'il souhaite enregistrer. Par ailleurs, un utilisateur qui découvre une émission intéressante ne dispose d'aucune possibilité pour programmer l'enregistrement de cette émission sur des enregistreurs qui ne lui appartiennent pas, ni même pour recommander facilement cette émission à des amis ou connaissances.

US20050149987 décrit un système permettant à une communauté de téléspectateurs de partager des informations relatives à des programmes. Une sélection de liens vers des programmes de télévision peut être partagée au travers de sites web, blogs ou e-mails, et chargée dans un enregistreur vidéo pour initier la programmation. Ce procédé permet ainsi de transmettre à des amis ou sur Internet des identifications de programmes intéressants.

Dans ce document, des enregistreurs vidéo numériques peuvent être programmés confortablement à l'aide de liens sélectionnables par les utilisateurs. Ces liens peuvent avoir différents formats, par exemple une description complète du programme telle que celle figurant dans un guide de programme électronique, ou un format similaire à une URL (Universal Resource Locator) utilisée pour identifier un emplacement Internet.

Un utilisateur de ce système peut transmettre un lien de programmation à d'autres utilisateurs, par exemple via e-mail ou en le déposant sur un espace de chat. Dans ce dernier cas, un modérateur d'espace de chat qui souhaite recommander un programme de télévision à enregistrer doit tout d'abord envoyer un e-mail à tous les membres de cet espace, pour leur demander de se connecter au chat et d'y sélectionner le lien du programme de télévision à enregistrer. Les enregistreurs sont programmés automatiquement uniquement si les utilisateurs se connectent et sélectionnent le lien recommandé. En revanche, aucune mise à jour de la programmation n'est effectuée si l'utilisateur ne lit pas ses e-mails et s'il ne se connecte pas au serveur de chat. La programmation de nouvelles émissions proposées dans un e-mail ou un forum de chat requiert donc dans tous les cas une intervention de l'utilisateur.

Cette solution ne permet donc pas de programmer à distance l'enregistreur d'un utilisateur absent, ou d'un utilisateur qui oublie ou refuse de se connecter au serveur de chat. Par ailleurs, ce procédé est trop complexe pour de nombreuses personnes qui ignorent comment se connecter à un serveur de chat, ou qui ne disposent pas d'une adresse e-mail active.

Le site web http://web.archive.org/web/20070714195654/-http://www3.tivo.com/tivo-tco/mix/index.do, extrait le 28.01.2008, décrit un procédé permettant à un « gourou » de sélectionner manuellement des listes d'émissions proposées à des utilisateurs. Un utilisateur qui veut suivre les recommandations d'un gourou doit visualiser la série de listes proposées par différents gourous, puis manuellement s'abonner à une liste de recommandations parmi les différentes listes proposées. Le document ne fournit pas d'indication sur la manière dont les identifications d'émissions dans les listes sélectionnées sont transmises aux enregistreurs des utilisateurs ; on ignore par exemple si une intervention de l'utilisateur est nécessaire lors de ce transfert. Par ailleurs, le procédé décrit ne permet pas à n'importe quel utilisateur d'enregistreur vidéo de programmer les enregistreurs de ses amis; seuls un nombre limité de gourous, apparemment des spécialistes ou des célébrités sélectionnées par le fabricant, peuvent proposer des listes de programme. Ces listes sont en revanche accessibles à tous les utilisateurs et même les gourous n'ont pas la possibilité de restreindre les droits d'accès à leur liste.

D'autres procédés et systèmes de programmation d'enregistreurs vidéo numériques sont aussi décrits dans les documents WO0147249, US20050120370, WO03098932 et WO2006051492.

On connaît par ailleurs des applications de type « social web » qui permettent à des internautes de partager des photos, par exemple sur www.flickr.com, des vidéos par exemple sur www.youtube.com ou d'autres types de documents. Youtube permet par exemple à n'importe quelle internaute de mettre à la disposition du public ou d'autres internautes n'importe quel contenu vidéo. Cette solution nécessite cependant que l'internaute qui souhaite mettre un document vidéo à disposition des autres utilisateurs dispose d'une copie de ce document, ce qui n'est pas le cas avant la première télédiffusion de cette vidéo. D'autre part, le stockage et la mise à disposition de copies de contenus vidéo pose des problèmes de droits d'auteur qui limitent les possibilités de diffusion.

### Bref résumé de l'invention

Un but de la présente invention est de proposer un système et un procédé de programmation d'enregistrement vidéo amélioré par rapport aux procédés de l'art antérieur.

Selon l'invention ces buts sont atteints au moyen du procédé definit dans la revendication 1.

Les étapes du procédé definit dans la revendication 1 peuvent être exécutées dans l'ordre d'énumération ou dans un autre ordre.

La sélection du contenu peut être effectuée dans un guide de programme électronique, ou en introduisant manuellement ou automatiquement une indication d'émission et/ou une date et une heure de début et de fin d'émission.

Cette solution présente notamment l'avantage par rapport à l'art antérieur de permettre à n'importe quel utilisateur-éditeur de programmer automatiquement les enregistreurs vidéo d'autres utilisateurs abonnés à un même thème. Inversement, un utilisateur peut programmer son enregistreur pour recevoir tous les contenus vidéo liés à un thème qui l'intéresse, simplement en s'abonnant à ce thème et en faisant confiance aux sélections de l'éditeur. Tout utilisateur peut en outre créer de nouveaux thèmes, inclure des émissions dans ce thème, inviter d'autres utilisateurs à s'y abonner, et/ou définir les droits des autres utilisateurs à voir ce thème, à voir le contenu de ce thème, à s'y abonner ou à modifier son contenu.

Par enregistreur vidéo, on entend n'importe quel appareil ou système capable de mémoriser durablement un signal vidéo sur un support de n'importe quel type, y compris un enregistreur à cassette, à disque dur, sur disque optique, un ordinateur, PDA ou téléphone mobile par exemple.

Lorsqu'il est abonné à un thème, un utilisateur délègue ainsi à l'administrateur ou aux différents administrateurs du thème le droit de programmer son enregistreur vidéo. Ce droit peut potentiellement être délégué à n'importe quel autre utilisateur, sans être limité à une classe d'utilisateurs ou de gourous particuliers. Inversement, un éditeur - utilisateur peut programmer les enregistreurs vidéo de n'importe quel autre utilisateur abonné à un thème administré ou édité par cet éditeur - utilisateur.

Lorsqu'un utilisateur est abonné à un thème (suite à une action de sa part ou à une invitation), son enregistreur vidéo est de préférence programmé entièrement automatiquement et sans aucune intervention de sa part, y compris lorsque de nouvelles émissions sont ajoutées au thème. Dans une variante, la programmation d'au moins certaines émissions, ou de toutes les émissions, ou la résolution de conflits, requiert ou permet une intervention de l'utilisateur pour confirmer ou annuler une programmation.

Cette solution combine ainsi les avantages d'un système de programmation d'enregistreurs vidéo depuis le web avec les caractéristiques d'une application de type « social web » permettant aux internautes de partager et de définir des droits sur des sélections de contenu vidéo à enregistrer. Elle permet généralement d'éviter les problèmes de droit d'auteur, puisque les contenus vidéo sont stockés par les utilisateurs eux-mêmes et pour leur usage propre ; seuls des instructions de programmation sont publiées.

Le procédé de l'invention offre l'avantage de permettre à des utilisateurs de former des communautés autour d'un sujet ou d'un ensemble d'émissions, et de partager des sélections de contenus vidéo sur un thème avec le public ou avec des groupes fermés d'utilisateurs, par exemple des utilisateurs affiliés ou apparentés sur un système de réseau social. Les utilisateurs font ainsi généralement davantage confiance au contenu des thèmes proposés, puisque ce contenu provient d'utilisateurs connus ou apparentés ; il est ainsi possible d'autoriser une programmation entièrement automatique de son appareil par des tiers, sans exiger nécessairement de confirmation de chaque émission ni même de chaque thème, et sans qu'une sélection ou confirmation au moyen d'un ordinateur ne soit nécessaire. Les instructions de programmations reçues sont de préférence directement exécutées depuis les enregistreurs vidéo des utilisateurs abonnés à un thème.

Ce procédé permet aussi à n'importe quel utilisateur-éditeur de partager des sélections de programmes vidéo avec un sous-ensemble des autres utilisateurs, sans devoir nécessairement rendre public ses goûts de programmation à l'ensemble des autres utilisateurs. Avantageusement, l'utilisateur-éditeur peut lui-même autoriser ou restreindre le droit des autres utilisateurs à voir ses thèmes et/ou à les modifier. Différents utilisateurs d'enregistreur vidéo peuvent ainsi s'abonner à différents thèmes, selon leurs liens dans l'application de réseau social.

Des règles supplémentaires, y compris des règles de priorité, une censure de contenu, des limites d'âge, des indications générales de programme désiré ou refusé, des règles empêchant l'enregistrement de nouvelle émission lorsque la capacité de l'enregistreur atteint son maximum, etc., peuvent être définies par chaque utilisateur pour limiter le risque de programmation indésirée via les thèmes, même de la part d'utilisateurs de confiance ou dans le cadre de thèmes abonnés. A titre d'exemple, un utilisateur peut bloquer la programmation d'émissions à contenu adulte ou violent proposées dans des thèmes autorisés.

Le procédé de l'invention manipule uniquement des indications et des listes commentées de contenu vidéo, sans toucher au contenu vidéo lui-même. Le contenu vidéo peut même être transmis par un canal différent de celui employé pour les instructions de commande de programmation, et à un autre moment. Cela permet d'utiliser le procédé de l'invention pour programmer l'enregistrement d'émissions encryptées qui seront par exemple stockées sur les enregistreurs de façon cryptée, puis décodées uniquement à la lecture.

Dans la suite de la description et des revendications, un thème est par exemple une liste éditée manuellement d'indications de contenus vidéo, avec des commentaires éventuellement introduits par un administrateur ou utilisateur du thème, et des droits d'accès pour les utilisateurs.

### Brève description des figures

Des exemples de mise en oeuvre de l'invention sont indiqués dans la description illustrée par les figures annexées dans lesquelles :
La figure 1 illustre un schéma bloc du système de l'invention.
La figure 2 illustre de manière schématique les couches du modèle logique des enregistreurs de l'invention.
La figure 3 est une vue d'écran schématique d'une page web permettant à un utilisateur de créer un nouveau thème.
La figure 4 est une vue d'écran schématique d'un exemple de guide de programme électronique selon l'invention.
La figure 5 est une vue d'écran schématique d'un exemple de boite de dialogue permettant de programmer l'enregistrement d'une émission ou d'un autre contenu vidéo.

### Exemple(s) de mode de réalisation de l'invention

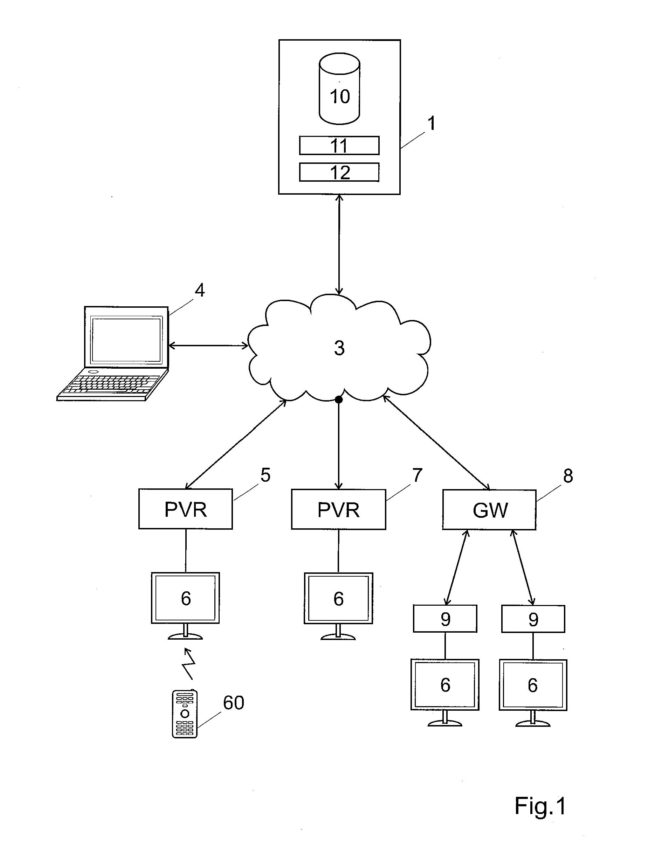

Le système illustré sur la figure 1 comporte un serveur central, par exemple un serveur web 1, connecté à un réseau de communication 3 tel qu'Internet. Le serveur 1 comporte une banque de données 10 pour stocker une liste de thèmes et d'utilisateurs ayant des droits sur ces thèmes, comme on le verra plus loin. La banque de données 10 peut être constituée par une banque de données relationnelles ou un ensemble de fichiers XML par exemple. Ces données peuvent être encryptées ou au moins stockées de manière sécurisée afin d'empêcher à des tiers de contrôler qui enregistre quel contenu vidéo ou qui s'abonne à quel thème.

Un module 11 permet à des utilisateurs à distance 4 d'accéder à un guide de programme électronique, par exemple sous la forme de pages web, et/ou au contenu de la banque de données 10, afin de modifier les thèmes ou les droits associés à ces thèmes. Un autre module 12 permet d'envoyer des instructions de commande d'enregistreurs vidéo, comme on le verra plus loin. A nouveau, ces instructions peuvent être encryptées afin d'éviter que des tiers ne les interceptent et déterminent les goûts des téléspectateurs.

La programmation des contenus vidéo à enregistrer et des thèmes dans le serveur se fait de manière privilégiée au travers d'ordinateurs 4 connectés à Internet 3 et accédant à des pages web présentées par le module 11 afin d'introduire ou d'éditer des enregistrements dans la banque de données 10. La programmation peut par exemple mettre en oeuvre des outils du type Java, dotnet, etc. D'autre moyens d'accès à la banque de données 10, par exemple depuis un téléphone mobile, un PDA, par SMS, au travers d'une interface vocale, ou directement depuis les téléviseurs 6, les enregistreurs vidéo 5, 7 ou les décodeurs 9 (set-top-box) des utilisateurs peuvent être mis en oeuvre. La sélection des émissions peut se faire depuis n'importe lequel de ces dispositifs, avec ou sans guide de programme électronique.

Les téléviseurs peuvent être des récepteurs de télévision analogiques ou numériques conventionnels, ou d'autres dispositifs capables de recevoir des signaux vidéo émis en broadcasting, y compris des téléphones mobiles, des PCs, des PDAs, etc.

Les utilisateurs ont accès à un programme de télévision émis en continu et en broadcasting sur leur téléviseur 6. Le programme de télévision peut être transmis en analogique ou en numérique par n'importe quel canal conventionnel, y compris en PAL, SECAM, NTSC, DVB-T, comme signal IP sur une ligne téléphonique ou autre etc. La diffusion des programmes n'est pas affectée par le procédé de l'invention.

Au moins un des utilisateurs dispose d'un enregistreur numérique 5 capable d'établir une connexion bidirectionnelle avec le serveur 1 au travers du réseau Internet. L'enregistreur 5 peut être combiné ou associé à un décodeur numérique et permet ainsi de recevoir, par n'importe quel canal, puis de mémoriser des contenus vidéo, par exemple des émissions de télévision. La connexion bidirectionnelle permet aussi d'envoyer des instructions au serveur 1, par exemple des instructions de programmation introduites directement sur l'enregistreur 5 ou à l'aide de la télécommande 60. Les programmes enregistrés peuvent être affichés sur un téléviseur ou un moniteur 6. Les programmes de télévision peuvent être reçus par le même canal 3 utilisé pour transmettre les instructions de programmation, ou par un autre canal non représenté sur la figure. Dans un mode de réalisation, l'enregistreur numérique 5 dispose à la fois d'une interface pour un signal de télévision numérique ou analogique, et d'une interface séparée de type Ethernet ou WLAN par exemple pour accéder à Internet.

D'autres utilisateurs peuvent disposer d'un enregistreur 7 numérique ou analogique capable de recevoir, mais pas d'envoyer, des instructions de commande de la part du serveur 1, par exemple au travers d'un réseau Internet. A nouveau, les programmes de télévision peuvent être transmis par le canal 3, ou par un autre canal, et affichés sur un téléviseur 7.

Une troisième catégorie d'utilisateurs dispose d'enregistreurs 9 uniquement capables de recevoir un signal vidéo, mais pas directement connectés à Internet. Dans ce cas, les instructions de programmation du serveur 1 peuvent être transmises par Internet à une passerelle 8, par exemple chez le câblo-opérateur de ces utilisateurs, afin de les inclure dans le signal vidéo, par exemple comme instructions pendant l'intervalle de retour de ligne ou de trame d'un signal analogique ou comme commande numérique. Les instructions de commande de programmation transmises en broadcasting avec le signal vidéo sont associées avec une identification de l'enregistreur ou du décodeur destinataire afin que seul ce destinataire ne les exécute. La transmission des instructions peut être effectuée immédiatement après la sélection, ou en différé, par exemple après plusieurs heures ou plusieurs jours, mais bien évidemment avant la diffusion de l'émission si cela est possible.

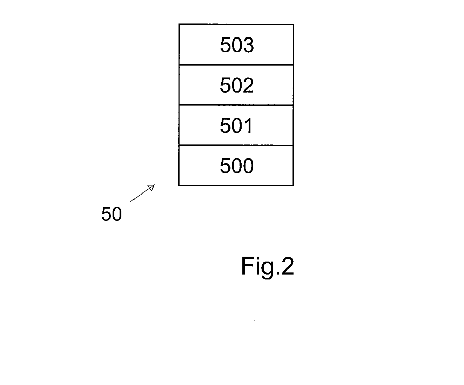

Les enregistreurs 5, 79 doivent généralement être modifiés pour recevoir et exécuter les instructions de commande de programmation reçues du serveur 1. La figure 2 illustre de manière simplifiée les couches d'interconnexion 50 du modèle logique d'un enregistreur numérique conventionnel. La couche 500 la plus basse est la couche physique définissant les aspects matériels de l'enregistreur. La couche 501 correspond aux drivers et gestionnaires logiciels qui accèdent à cette couche physique. La couche 502 est une couche middleware, par exemple une couche logicielle MHP dans le cas d'un enregistreur DVB (Digital Video Broadcasting). Enfin la couche 503 est une couche applicative avec des applications installées par exemple par le fabricant de l'enregistreur, par un câblo-opérateur, et/ou par l'utilisateur lui-même. Le décodeur de l'invention est de préférence modifié au niveau de la couche 502 et/ou de la couche 503 afin de reconnaitre des instructions de programmation provenant du serveur 1 et d'exécuter ces instructions

Nous allons maintenant décrire un exemple de mise en oeuvre du procédé de programmation selon l'invention. Comme indiqué plus haut, les utilisateurs emploient de préférence un navigateur web sur un ordinateur personnel 4 pour définir de nouveaux thèmes, éditer des thèmes existants, ajouter ou éditer des indications de contenu vidéo dans un thème, ou définir des droits d'accès à ces thèmes. Un accès depuis un téléphone mobile, directement depuis l'enregistreur vidéo ou depuis un autre dispositif est possible.

L'utilisateur qui souhaite mettre à sa disposition, ou à la disposition d'autres utilisateurs, une liste d'indications de contenu vidéo à enregistrer se connecte tout d'abord avec son navigateur sur une page web présentée par le serveur 1, à une adresse URL prédéfinie. Il s'identifie ensuite à l'aide d'un mot de passe ou de toute autre méthode d'identification appropriée. Cette identification lui permet d'accéder à une page personnalisée tenant compte de son profil et de ses choix précédents.

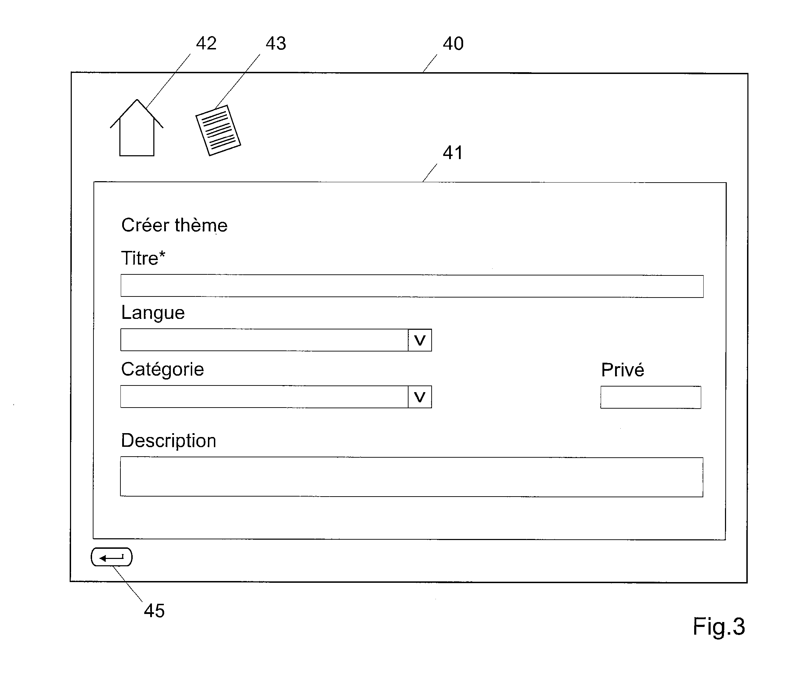

Afin de programmer l'enregistrement d'un contenu vidéo, l'utilisateur doit d'abord créer un thème, c'est-à-dire une table ou une structure dans la banque de données 10 regroupant des indications de contenu vidéo, par exemple d'émissions, sur des sujets proches ou susceptibles d'intéresser une même communauté d'utilisateurs. Un exemple de boite de dialogue 41 sur une page web 40 permettant de créer un nouveau thème est illustré sur la figure 3. La page web comporte une icône 42 permettant à l'internaute de retourner directement à la page d'accueil, et une icône 43 permettant d'accéder directement à un guide de programme électronique conventionnel.

Lorsque l'utilisateur-éditeur décide de créer un nouveau thème, la boîte de dialogue 41 s'ouvre et invite l'utilisateur à indiquer un titre du thème (par exemple « plongée »), une langue qui sera la langue des commentaires et de la plupart des contenus vidéo programmés, une catégorie (par exemple « documentaire », « films », enfants », etc) et un commentaire ou d'autres métadonnées permettant à d'autres utilisateurs de retrouver plus facilement ce thème, et de comprendre si les contenus vidéo enregistrés sont susceptibles de les intéresser. Le nom ou l'alias de l'utilisateur-éditeur, ainsi que la date de la programmation, peuvent aussi être ajoutés automatiquement par le système.

L'utilisateur peut aussi définir des droits d'accès sur ce thème, par exemple une combinaison d'un ou plusieurs des droits suivants :
- Thème privé : seul l'utilisateur-éditeur qui a crée le thème peut le voir dans la liste de thèmes, y ajouter ou supprimer des indications de contenus vidéo, commenter le thème ou les contenus vidéo, voir la liste des contenus vidéo programmées ou utiliser cette liste pour programmer son enregistreur.
- Thème public : tous les utilisateurs peuvent voir le thème dans une liste des thèmes et choisir de s'y abonner pour programmer automatiquement l'enregistrement des contenus vidéo listés dans le thème.
- Thème semi-public : l'utilisateur-éditeur qui crée le thème limite son accès à un groupe fermé d'utilisateurs, par exemple à un groupe d'amis ou à sa famille. L'accès au thème est donc possible sur invitation ou sélection de la part de l'utilisateur-éditeur du thème ou d'un autre utilisateur autorisé à administrer le thème. Les utilisateurs ainsi invités à un thème doivent de préférence confirmer cet abonnement, à moins qu'ils aient défini dans leurs préférences qu'ils renoncent à cette confirmation et acceptent d'êtres inclus automatiquement dans tous les thèmes auxquels ils sont invités, ou dans tous les thèmes dans lesquels ils sont invités par des utilisateurs de confiance, par exemple des amis dans un système de réseau social.

Un moteur de recherche d'utilisateurs peut être inclut dans le système afin de permettre de retrouver facilement d'autres utilisateurs identifiés par leur nom ou par un alias. Les utilisateurs ont de préférence aussi la possibilité de rester anonymes dans le système, et de ne pas faire apparaître leur nom ou leur alias dans les listes d'utilisateurs ; ils peuvent aussi choisir de restreindre les informations mises à la disposition des autres utilisateurs.

Dans le cas d'un thème public ou semi-public, l'utilisateur-éditeur qui a crée le thème peut accorder des droits plus ou moins larges à tous les autres utilisateurs, ou à certains utilisateurs spécifiés, par exemple en accordant ou en interdisant les droits suivants :
- Droit de voir le thème, ou le contenu du thème. Un utilisateur peut par exemple choisir d'offrir un thème visible uniquement par ses amis, à sa famille, à lui-même, à ses clients, etc.
- Droit d'ajouter des indications de contenu vidéo à un thème.
- Droit d'effacer une indication de contenu vidéo d'un thème.
- Droit de commenter le thème.
- Droit de commenter ou de donner une note à un contenu vidéo sélectionné dans un thème.
- Droit d'inviter des autres utilisateurs dans le thème.
- Droit de modifier les droits des autres utilisateurs.
- Droit de voir le nom ou l'alias de l'éditeur du thème.
- Etc.

Le thème est ensuite crée et stocké avec ses attributs dans la banque de données 10 lorsque l'utilisateur sélectionne la touche 45. Une page web non représentée permet de préférence à un utilisateur de consulter la liste des thèmes auxquels il a accès ou pour lesquels il est éditeur, la liste des contenus vidéo programmés dans chaque thème, et de modifier ou d'éditer les thèmes et/ou la liste des utilisateurs du thème pour lesquels il dispose des droits d'accès appropriés. Une autre page non représentée permet d'effectuer des recherches par mots-clés, par catégorie, par langue etc. parmi les thèmes publics auxquels un utilisateur peut s'abonner, et de s'abonner aux thèmes qui l'intéressent afin d'enregistrer automatiquement les contenus vidéo listés dans le thème.

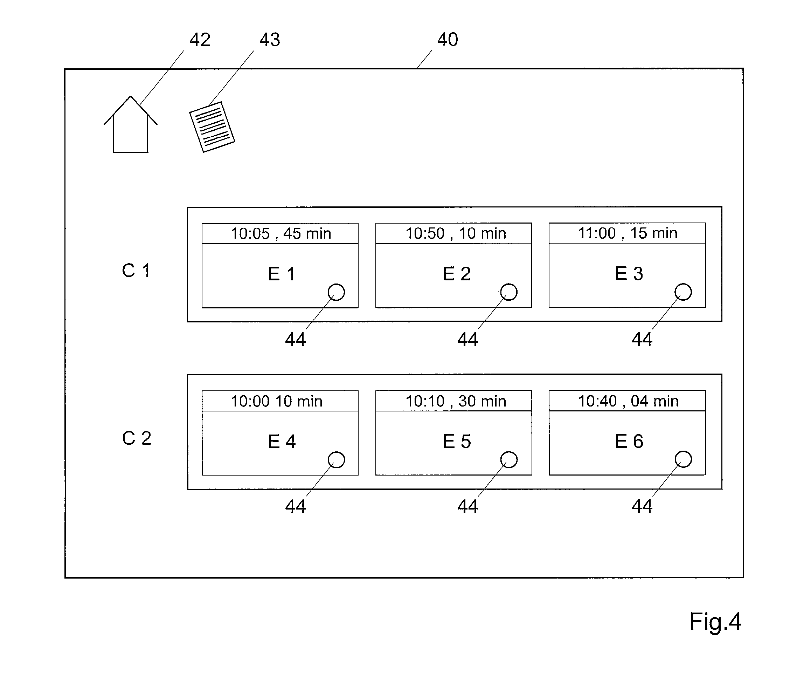

La figure 4 illustre un exemple de guide de programme électronique exposé par le serveur 1 lorsque l'utilisateur clique sur l'icône 43. Le guide indique la liste des contenus vidéo, par exemple des émissions de télévision, E1, E2, .. jusqu'à E6 diffusées par différentes chaînes C1, C2 auquel l'utilisateur a accès. Des informations sont affichées au sujet de chaque contenu vidéo, y compris par exemple l'heure de début, la durée, la catégorie (film, documentaire, etc.), un résumé, une photo, etc. Le guide de programme électronique affiche par exemple trois semaines d'émissions en avance. La liste des chaînes proposées peut être limitée manuellement ou automatiquement aux chaînes auxquelles l'utilisateur a effectivement accès, notamment si l'utilisateur ou son câblo-opérateur a indiqué cette liste dans le profil de l'utilisateur. Un bouton 44 près de la zone réservée à chaque émission permet de programmer son enregistrement dans tous les enregistreurs des utilisateurs abonnés au thème concerné.

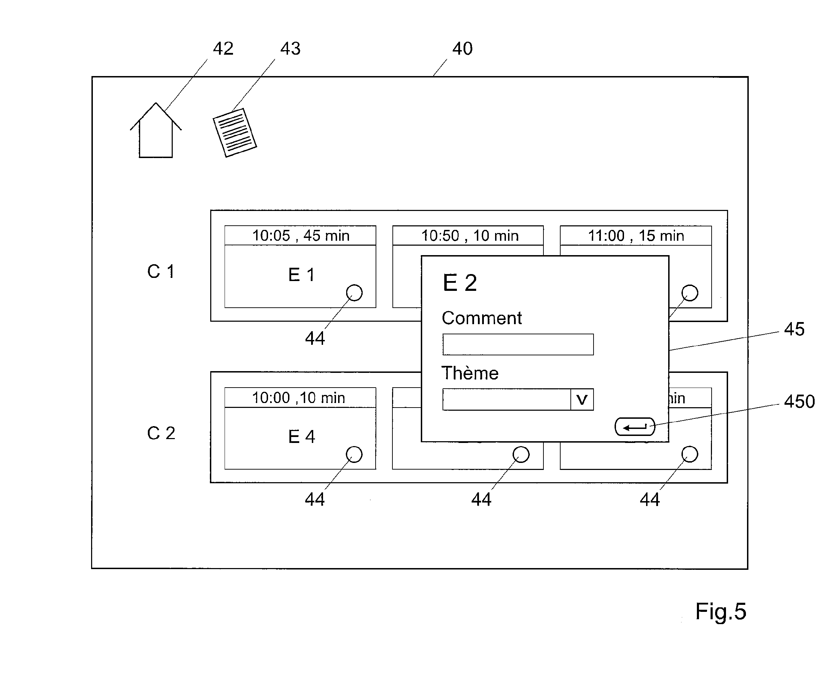

La figure 5 illustre un exemple de page web affichée lorsque l'utilisateur sélectionne un des boutons 44 pour enregistrer une des émissions du guide de programme électronique, dans cet exemple le contenu vidéo ou l'émission E2. Une boite de dialogue 45 ou une nouvelle page s'ouvre afin de permettre à l'utilisateur d'introduire un commentaire au sujet du contenu vidéo sélectionné et de choisir parmi la liste des thèmes auxquels l'utilisateur a accès celui ou ceux avec lesquels une indication du contenu sélectionné doit être associée. La programmation de l'enregistrement chez tous les abonnés du thème est ensuite initiée en sélectionnant la touche 450.

Le serveur 1 comporte un module 12 pour envoyer à distance des instructions de programmation d'enregistreurs à tous les utilisateurs abonnés à des thèmes incluant des contenus vidéo diffusés prochainement. Dans un mode d'exécution, des instructions sont uniquement envoyées aux utilisateurs qui ont effectivement la possibilité de recevoir les chaînes de télévision concernées. Si la liste des chaînes accessibles à chaque utilisateur n'est pas connue du serveur, il est aussi possible d'envoyer des instructions à tous les utilisateurs abonnés aux thèmes concernés, et d'ignorer les instructions qui ne peuvent pas être exécutées au niveau des enregistreurs.

De la même façon, les conflits éventuels entre plusieurs contenus vidéo dont les périodes de diffusion se chevauchent peuvent être réglés au niveau du serveur 1, par exemple en fonction de critères prédéfinis ou personnalisés par les utilisateurs. Il est par exemple imaginable que chaque utilisateur définisse des priorités en fonction des thèmes abonnés, des catégories de contenu vidéo et/ou des notes attribuées par les internautes aux différents contenus vidéo. Des critères plus complexes peuvent être définis pour limiter le nombre d'émissions enregistrées; un utilisateur peut par exemple décider d'un nombre maximum de contenus vidéo ou de minutes de contenu qui doivent être enregistrés chaque jour, de manière globale et/ou par catégorie ou par thème. Ces critères peuvent être vérifiés soit au niveau du serveur 1, soit au niveau de l'enregistreur 5, 7 9, ou éventuellement au niveau de la passerelle 8.

L'utilisateur peut aussi définir des règles de gestion de la mémoire disponible dans son enregistreur, et par exemple définir qu'il souhaite conserver au maximum 120 heures de contenu vidéo, ou 200 Gigabytes, ou au maximum 10 films, 3 heures de documentaires et les trois derniers matchs de football enregistrés. Ces règles de gestion peuvent être introduites via le site web exposé par le serveur 1, ou directement dans l'enregistreur vidéo 5, 7, 9. Elles sont ensuite vérifiées soit par le serveur 1, soit par l'enregistreur vidéo, et lorsque l'une d'elles est satisfaite une commande d'effacement d'enregistrement est envoyée par le serveur 1 et exécutée par l'enregistreur vidéo, ou directement exécutée par l'enregistreur vidéo, de manière à effacer automatiquement les contenus vidéo correspondant aux critères d'effacement sélectionnés. Avant l'effacement, une demande de confirmation peut être affichée sur le téléviseur et demandée à l'utilisateur. Dans une variante, les contenus vidéo les plus anciens, et/ou ceux qui sont les moins souvent consultés ou le plus mal noté par les utilisateurs du thème, et/ou ceux qui ont déjà été vus par l'utilisateur, et/ou ceux qui ne sont pas protégés explicitement contre l'effacement sont effacés dès la mémoire d'enregistrement disponible le nécessite.

Les instructions de programmation ou d'effacement envoyées par le serveur 1 sont transmises sous forme numérique au travers du réseau 3 aux enregistreurs 5, 7 et/ou à la passerelle 8. Les instructions transmises aux enregistreurs 5, 7 peuvent être envoyées en mode « push », c'est-à-dire à l'initiative du serveur 1, ou de préférence en mode « pull » lorsque l'enregistreur 5, 7 vérifie de lui-même si des commandes à son intention sont disponibles sur le serveur 1. Cette vérification peut par exemple être effectuée à chaque fois que l'enregistreur est enclenché, qu'il quitte le mode de veille, et/ou à intervalles périodiques.

Le procédé et système de l'invention comporte avantageusement un système de recommandation automatique afin de proposer aux utilisateurs abonnés des thèmes ou des contenus vidéo supplémentaires. Le système de recommandation automatique peut par exemple impliquer un système de corrélation entre les choix des utilisateurs pour leur proposer des recommandations par exemple lorsqu'ils se connectent sur le site web du serveur 1, ou lorsqu'ils s'inscrivent à un nouveau thème ou programment un nouveau contenu vidéo dans un thème existant. Les recommandations peuvent par exemple être du type :
- Les téléspectateurs abonnés à ce thème X sont souvent aussi abonnés au thème Y.
- Les téléspectateurs qui ont programmé cette émission ont aussi parfois programmé cet autre contenu vidéo.
- L'émission X semble traiter d'un même sujet que l'émission Y.
- Les trois contenus vidéo les plus souvent programmés la semaine prochaine sont a, b et c.
- Etc.

Les recommandations peuvent aussi être basées sur des calculs de distance entre contenus vidéo, par exemple en utilisant des algorithmes sémantiques et des analyses de catégorie pour analyser le contenu des descriptions de contenu vidéo et des commentaires ou métadonnées associés, et pour proposer des contenus vidéo apparentés. Si l'analyse est faite au moins en partie au niveau de l'enregistreur numérique, ou si le serveur dispose d'un moyen pour savoir quels contenus vidéo enregistrés sont effectivement regardés, les recommandations peuvent aussi dépendre de la lecture des émissions, par exemple afin de tenir compte différemment des contenus regardés plusieurs fois ou de ceux qui n'ont pas été regardés jusqu'au bout.

Le serveur 1 et/ou la passerelle 8 peut aussi recommander automatiquement de nouvelles formes d'abonnement à des chaînes de télévision, par exemple lorsque l'utilisateur s'abonne à des thèmes qui lui proposent des contenus vidéo diffusés par des chaînes qu'il ne peut pas recevoir ou pas décoder. Il est par exemple envisageable que l'utilisateur reçoive un message ou un autre contenu publicitaire qui lui propose de s'abonner à un bouquet de chaînes de télévisions sur la thématique « mer et nature » lorsqu'il programme souvent des émissions de plongée ou s'il s'abonne à des thèmes sur ce sujet.

De la même façon, il est aussi possible de proposer à l'utilisateur des contenus vidéo à la demande (video on demand) qui correspondent à ses goûts, lorsque le système de diffusion le permet. Un utilisateur qui programme régulièrement des documentaires de plongée, ou qui introduit des commentaires sur ce sujet, pourra se voir proposer de télécharger dans son téléviseur ou dans son enregistreur des films payant sur le sujet, ou des liens sur des contenus vidéo, photo ou autre disponibles sur Internet, par exemple sur un site tel que www.youtube.com.

Les recommandations de contenu vidéo, de thèmes, d'abonnement à de nouveaux bouquets de chaînes ou d'émission à la demande peuvent être affichées sur la page web présentée par le serveur 1 lorsque l'utilisateur se connecte à ce serveur. Il est aussi possible de lui envoyer de telles recommandations par e-mail ou par la poste s'il a indiqué son adresse e-mail ou postale dans son profil et qu'il a donné son accord pour ce type de publicité. Enfin, il est aussi possible d'afficher des recommandations directement sur l'écran des téléviseurs 6, par exemple sous la forme d'une annonce ou d'un contenu publicitaire (texte, image, vidéo, lien hypertexte, etc.) personnalisé enregistré sur les enregistreurs 7 et diffusé par exemple au début, au milieu ou à la fin d'une émission. Le contenu publicitaire peut aussi être superposé au contenu vidéo enregistré, ou affiché en écran partagé (split screen), etc.

Afin d'encourager la communication entre utilisateurs au sujet des contenus vidéo, le serveur web peut aussi proposer aux administrateurs de thèmes, ou à d'autres utilisateurs, de créer des blogs hébergés sur le serveur 1, ou ailleurs, et relatifs aux thèmes créés et aux émissions sur ces thèmes. On renforce de cette manière l'esprit de communauté autour d'un thème. Les blogs peuvent être publics ou limités avec des droits d'accès, par exemple en les rendant accessibles uniquement aux utilisateurs abonnés aux thèmes concernés par ces blogs.

Le serveur de l'invention peut être financé par exemple par les câblo-opérateurs qui ont un intérêt à ce que les utilisateurs se voient proposer fréquemment de nouveaux contenus vidéo sur des chaînes auxquelles ils seront tentés de s'abonner. Dans une variante, l'abonnement à au moins certains thèmes peut être payant, le montant payé étant versé à l'utilisateur qui a créé le thème, à l'opérateur du serveur 1, au câblo-opérateur et/ou aux chaînes qui diffusent les contenus vidéo sélectionnés dans le thème. Des thèmes sponsorisés sont aussi envisageable ; un magazine papier consacré à la plongée pourrait par exemple donner à ses lecteurs l'accès à un thème accessible avec un code indiqué dans le magazine. Une publicité liée au sponsor du thème peut être affichée par le site web en liaison avec chaque thème proposé.

Il est aussi possible de financer ce service, au moins en partie, par de la publicité affichée sur le site web du serveur 1 et/ou des films publicitaires ajoutés automatiquement par le serveur 1, la passerelle 8 ou l'enregistreur vidéo au début, au milieu ou à la fin des contenus vidéo enregistrées. La publicité peut aussi être affichée dynamiquement par l'enregistreur, par exemple lors de la lecture d'un contenu vidéo, mais sans être stockées avec ce contenu. Le choix de la publicité affichée dépend de préférence du profil de l'utilisateur tel que défini dans le serveur 1, notamment de sa langue, et/ou des thèmes abonnés.

### Numéros de référence employés sur les figures

- 1: Serveur
- 10: Banque de données
- 11: Module permettant à des utilisateurs à distance d'accéder à un guide de programme électronique et/ou au contenu de la banque de données 10
- 12: Module permettant d'envoyer des instructions de commande de programmation d'enregistreurs vidéo
- 3: Réseau de télécommunication, par exemple Internet
- 4: Système de traitement numérique des utilisateurs, par exemple ordinateur
- 40: Page web
- 41: Boite de dialogue de création de thème
- 42: Icône de retour à la page d'accueil.
- 43: Icône d'accès au guide de programme électronique
- 44: Bouton ou icône de sélection d'émission à enregistrer
- 45: Boite de dialogue pour la programmation d'une émission
- 5: Enregistreur vidéo personnel avec interface bidirectionnelle
- 50: Pile du modèle logique des enregistreurs
- 500: Couche physique
- 501: Couche de drivers
- 502: Couche middleware
- 503: Couche d'applications
- 6: Téléviseur ou moniteur
- 60: Télécommande
- 7: Enregistreur vidéo personnel avec interface monodirectionnelle
- 8: Passerelle
- 9: Enregistreur vidéo personnel sans accès direct à Internet

## Revendications

1. Procédé de programmation d'enregistreurs vidéo (5, 7, 9) comprenant les étapes suivantes :
Sélection par un éditeur - utilisateur d'enregistreur vidéo d'un contenu vidéo à enregistrer,
Inclusion d'une identification dudit contenu vidéo dans un thème regroupant différents contenus;
Choix des utilisateurs abonnés audit thème;
Transmission automatique d'instructions de programmation pour l'enregistrement dudit contenu vidéo aux enregistreurs vidéo (5, 7, 9) des utilisateurs abonnés audit thème, les enregistreurs vidéo desdits utilisateurs abonnés étant ainsi programmés sans aucune intervention de leur part;
Effacement de contenus vidéo enregistrés par ledit enregistreur vidéo (5, 7, 9);
**caractérisée en ce que** ladite étape d'effacement de contenus vidéo enregistrés comprend les étapes de :
Définition par un utilisateur de règles pour choisir les contenus vidéo devant être effacés automatiquement de son enregistreur, de manière à permettre l'effacement des contenus vidéo les moins souvent consultés et/ou les plus mal notés par les utilisateurs abonnés audit thème;
Vérification desdites règles par un serveur (1) de programmation d'enregistreurs vidéo ; et
Envoi des commandes d'effacement d'enregistrement à l'enregistreur vidéo dudit utilisateur lorsque l'une desdites règles est satisfaite.

2. Le procédé de la revendication 1, dans lequel les contenus vidéo correspondant à des critères d'effacement sont automatiquement effacés, de manière à permettre en outre l'effacement des contenus vidéo les plus anciens et/ou ceux qui ont déjà été vus par l'utilisateur.

3. Le procédé de l'une des revendications 1 à 2, dans lequel au moins un éditeur - utilisateur est à la fois un éditeur qui sélectionne le contenu vidéo de thèmes proposés à d'autres utilisateurs, et un utilisateur dont l'enregistreur vidéo est programmé avec les émissions incluses dans des thèmes gérés par d'autres éditeurs-utilisateurs.

4. Le procédé de l'une des revendications 1 à 3, dans lequel un même enregistreur vidéo est utilisé pour sélectionner le contenu vidéo inclus dans un thème et pour enregistrer le contenu vidéo d'autres thèmes.

5. Le procédé de l'une des revendications 1 à 4, comprenant une étape au cours de laquelle ledit éditeur-utilisateur créant un thème définit une liste fermée d'utilisateurs qui ont le droit de s'y abonner.

6. Le procédé de l'une des revendications 1 à 5, comprenant une étape au cours de laquelle un utilisateur s'abonne lui-même à un thème public ou à un thème auquel il a le droit de s'abonner.

7. Le procédé de l'une des revendications 1 à 6, comprenant une étape au cours de laquelle ledit éditeur-utilisateur créant un thème définit les droits d'autres utilisateurs du thème, chaque utilisateur pouvant se voir donner ou refuser au moins un des droits suivants :
droit de s'abonner au thème ;
droit d'ajouter des indications de contenu vidéo au thème ;
droit d'effacer des indications de contenu vidéo du thème ;
droit de commenter un contenu vidéo ;
droit de commenter le thème.

8. Le procédé de l'une des revendications 1 à 7, comprenant une étape d'ajout d'un commentaire ou d'une note à un contenu vidéo sélectionné dans un thème.

9. Le procédé de l'une des revendications 1 à 8, comprenant une étape de recherche de thèmes à l'aide d'un outil de recherche sur un serveur (1).

10. Le procédé de l'une des revendications 1 à 9, dans lequel un programme exécuté par un serveur (1) ou dans ledit enregistreur numérique (5, 7, 9) gère les conflits lors de la programmation simultanée de plusieurs contenus vidéo.

11. Le procédé de la revendication 10, dans lequel l'utilisateur définit des priorités associées aux thèmes pour régler lesdits conflits.

12. Le procédé de l'une des revendications 1 à 11, dans lequel un serveur (1) envoie des instructions de commande de programmation auxdits enregistreurs vidéo (5, 7, 9) sous une forme encryptée.

13. Le procédé de l'une des revendications 1 à 12, comprenant une étape au cours de laquelle un utilisateur définit sur un serveur (1) les chaînes de télévision (C1, C2) auquel il a accès.

14. Le procédé de l'une des revendications 1 à 13, dans lequel lesdites instructions de programmation sont transmises via Internet à des enregistreurs numériques (5, 7) directement connectés à un réseau de type Internet (3).

15. Le procédé de l'une des revendications 1 à 14, dans lequel lesdites instructions de programmation sont transmises à au moins une passerelle (8) chez un câblo-opérateur qui les inclut dans le signal vidéo transmis aux utilisateurs.

16. Le procédé de l'une des revendications 1 à 15, comprenant une étape d'ajout d'un contenu publicitaire associé à au moins certains contenus vidéo enregistrés.

17. Serveur (1) de programmation d'enregistreurs vidéo comprenant :
un guide de programmes électronique ;
une banque de données (10) pour stocker une liste de thèmes regroupant des indications de contenu vidéo et des droits d'utilisateurs associés à ces indications de contenu vidéo;
une interface (11) permettant aux utilisateurs de modifier à distance les listes de thèmes et les droits associés;
un module (12) pour transmettre automatiquement des instructions de programmation d'enregistreurs vidéo afin d'initier l'enregistrement automatique des contenus vidéo dans chaque thème aux utilisateurs qui bénéficient des droits correspondants, sans intervention desdits utilisateurs;
un serveur web permettant d'envoyer aux enregistreurs vidéo des commandes d'effacement d'enregistrement ;
**caractérisé en ce que**
ledit serveur web permettant aux utilisateurs de définir des règles de gestion de la mémoire disponible dans leurs enregistreurs et permettant d'envoyer à ces enregistreurs vidéo des commandes d'effacement d'enregistrement lorsque l'une desdites règles est satisfaite de manière à permettre l'effacement des contenus vidéo les moins souvent consultés et/ou les plus mal notés par les utilisateurs du thème.

## Patentansprüche

1. Verfahren zur Programmierung von Videorekordern (5, 7, 9) aufweisend die folgenden Schritte:
Auswahl eines aufzunehmenden Videoinhalts durch eine Videorekordereditor-Benutzer;
Berücksichtigen einer Identifikation des Videoinhalts in ein Thema, das verschiedene Inhalte gruppiert;
Auswahl von Benutzern, die dieses Thema abonniert haben;
automatische Übertragung von Programmierungsinstruktionen für die Aufnahme des Videoinhalts an die Videorekorder der abonnierten Benutzer des Themas, wobei die Videorekorder der abonnierten Benutzer ohne jede Intervention dieser programmiert werden;
Löschen des Videoinhalts, des von dem Videorekorder (5, 7, 9) aufgenommenen Inhalts;
**dadurch gekennzeichnet, dass** der Schritt des Löschens des aufgenommenen Videoinhalts die Schritte aufweist:
Definieren von Regeln durch einen Benutzer um Videoinhalte auszuwählen, die automatisch von seinem Rekorder gelöscht werden sollen, um das Löschen der am wenigsten oft berücksichtigten Videoinhalte und/oder der von abonnierten Benutzern am niedrigsten beurteilten Videoinhalte zu löschen;
Kontrollieren dieser Regeln mittels eines Servers (1) zur Programmierung der Videorekorder; und
Senden der Löschkommandos für Aufnahmen an den Videorekorder des Benutzers, wenn eine dieser Regeln erfüllt ist.

2. Das Verfahren nach Anspruch 1, wobei die Videoinhalte, die den Löschungskriterien entsprechen, automatisch gelöscht werden, um so das weitere Löschen der ältesten Videoinhalte und/oder der Videoinhalte, die bereits von dem Benutzer gesehen wurden, zu erlauben.

3. Das Verfahren nach einem der Ansprüche 1 bis 2, wobei mindestens ein Editor-Benutzer gleichzeitig ein Editor, der den Videoinhalt der anderen Benutzern vorgeschlagenen Themen auswählt, und ein Benutzer, dessen Videorekorder mit Sendungen, die in den von anderen Benutzer-Editoren verwalteten Themen beinhaltet sind, programmiert wird, ist.

4. Das Verfahren nach einem der Ansprüche 1 bis 3, wobei ein gleicher Videorekorder benutzt wird, um den Videoinhalt, der in einem Thema beinhaltet ist, auszuwählen und um den Videoinhalt von anderen Themen aufzunehmen.

5. Das Verfahren nach einem der Ansprüche 1 bis 4, aufweisend einen Schritt während dem der Editor-Benutzer ein Thema erzeugt, das eine abgeschlossene Liste von Benutzern definiert, die das Recht zum Abonnieren dieser haben.

6. Das Verfahren nach einem der Ansprüche 1 bis 5, aufweisend einen Schritt während dem ein Benutzer sich für ein öffentliches Thema oder für ein Thema, für das er das Recht zum Abonnieren hat, abonniert.

7. Das Verfahren nach einem der Ansprüche 1 bis 6, aufweisend einen Schritt, während dem der Editor-Benutzer, der ein Thema erzeugt, die Rechte von anderen Benutzern des Themas definiert, wobei jedem Benutzer mindestens eines der folgenden Rechte gewährt oder verweigert wird:
Recht zum Abonnieren des Themas;
Recht zum Hinzufügen von Hinweisen zu Videoinhalten dieses Themas;
Recht zum Löschen von Hinweisen zu Videoinhalten dieses Themas;
Recht zum Kommentieren eines Stücks von Videoinhalten;
Recht zum Kommentieren eines Themas.

8. Das Verfahren nach einem der Ansprüche 1 bis 7, aufweisend einen Schritt des Hinzufügens eines Kommentars oder einer Bewertung zu einem Stück eines in einem Thema ausgewählten Videoinhalts.

9. Das Verfahren nach einem der Ansprüche 1 bis 8, aufweisend einen Schritt des Suchens nach Themen mittels eines Suchwerkzeugs auf dem Server (1).

10. Das Verfahren nach einem der Ansprüche 1 bis 9, wobei ein Programm von dem Server (1) oder in dem digitalen Rekorder (5, 7, 9) ausgeführt wird, das Konflikte zwischen gleichzeitigen Aufnahmen verschiedener Videoinhalte verwaltet.

11. Das Verfahren nach Anspruch 10, wobei der Benutzer Prioritäten definiert, die zu den Themen assoziiert werden, um die Konflikte zu lösen.

12. Das Verfahren nach einem der Ansprüche 1 bis 11, wobei ein Server (1) Programmierungsbefehle an die Videorekorder (5, 7, 9) verschlüsselt sendet.

13. Das Verfahren nach einem der Ansprüche 1 bis 12, aufweisend einen Schritt während dem ein Benutzer auf einem Server (1) die Fernsehkanäle (C1, C2) definiert, zu denen er Zugang hat.

14. Das Verfahren nach einem der Ansprüche 1 bis 13, wobei die Programmierungsanweisungen über das Internet zu den digitalen Rekordern (5, 7), die direkt zu einem Internet-typ-Netzwerk (3) verbunden sind, übertragen werden.

15. Das Verfahren nach einem der Ansprüche 1 bis 14, wobei die Programmierungsbefehle an mindestens einen Gateway (8) bei einem Kabelanbieter übertragen werden, der diese in die an die Benutzer übertragenen Videosignale eingibt.

16. Das Verfahren nach einem der Ansprüche 1 bis 15, aufweisend den Schritt des Hinzufügens von Werbeinhalten, die Bezug zu mindestens einigen aufgenommenen Videoinhalten haben.

17. Ein Server (1) zur Programmierung von Videorekordern (5, 7 , 9) aufweisend:
Einen elektronischen Programmführer;
eine Datenbank (10) zum Speichern einer Listen von Themen, die Hinweise von Videoinhalten und zu diesen Hinweisen der Videoinhalte assoziierte Benutzerrechte gruppiert;
eine Schnittstelle (11), die es den Benutzern erlaubt, die Listen der Themen und der assoziierten Benutzerrechte aus der Entfernung zu verändern;
ein Modul (12) zum automatischen Übertragen von Programmierungsbefehlen der Videorekorder, um das automatische Aufnehmen von Videoinhalten in jedem Thema bei den Benutzern, die die entsprechenden Rechte haben, ohne Intervention dieser Benutzer zu initiieren;
einen Webserver, der das Senden von Videorekorderbefehlen zum Löschen von Aufnahmen erlaubt;
**dadurch gekennzeichnet, dass**
der Webserver den Benutzern erlaubt, Regeln für das Verwalten des verfügbaren Speichers in deren Videorekordern zu definieren, und erlaubt, an diese Videorekorder Befehle zum Löschen von Aufnahmen zu senden, wenn eine dieser Regeln erfüllt ist, so dass das Löschen der am wenigsten oft in Betracht gezogenen Videoinhalte und/oder der von den Benutzern am schlechtesten bewerteten Videoinhalte des Themas erlaubt wird.

## Claims

1. A method for programming video recorders (5, 7, 9), comprising the following steps:
Selection by a video recorder editor - user of a video content to record,
Inclusion of an identification of said video content in a theme grouping different contents;
Choice of users subscribed to said theme ;
Automatic transmission of programming instructions of the record of said video content to video recorders (5, 7.9) of the subscribed users to said theme, the video recorders of said subscribed users being programmed without any intervention of them;
Deleting video contents recorded by said video recorder (5.7, 9); **characterized in that** said step for deleting the recorded video contents includes the steps of:
Defining rules by a user to choose video contents to be automatically deleted from his recorder, to allow deletion of the least often consulted video contents and/or the most poorly rated by subscribed users to said theme;
Checking those rules by a server (1) of programming video recorders; and
Sending deletion commands of recording to the video recorder of said user when one of said rules is satisfied.

2. The method of claim 1, wherein the video contents corresponding to deletion criteria are automatically deleted, so as to allow further deletion of the oldest video contents and/or those who have already been seen by the user.

3. The method of one of claims 1 to 2, wherein at least one editor-user is at the same an editor selecting the video content of themes proposed to other users, and a user whose video recorder is scheduled with transmissions included in the themes managed by other editor-users.

4. The method of one of claims 1 to 3, wherein a same video recorder is used to select the video content included in a theme and for recording the video content of other themes.

5. The method of claims 1 to 4, including a step during which said editor-user creating a theme defines a closed list of users who have the right to subscribe thereto.

6. The method of claims 1 to 5, including a step during which a user subscribes himself to a public theme or to a theme to which he has the right to subscribe.

7. The method of one of claims 1 to 6, including a step during which said editor-user creating a theme defines the rights of other users of the theme, wherein each user can be granted or refused at least one of the following rights:
right to subscribe to the theme ;
right to add indications of video content of the theme;
right to delete indications of video content of the theme ;
right to comment on a piece of video content;
right to comment on a theme

8. The method of one of claim 1 to 7, including a step of adding a comment or a rating to an item of video content selected in a theme.

9. The method of one of claim 1 to 8, including a step of searching for themes by means of a search tool on said server (1).

10. The method of one of claim 1 to 9, wherein a program executed by a server (1) or in said digital recorder (5, 7, 9) manages conflicts during the simultaneous programming of several video contents.

11. The method of claim 10, wherein the user defines priorities associated to the themes to settle said conflicts.

12. The method of one of claim 1 to 11, wherein a server (1) sends programming command instructions to said video recorders (5, 7, 9) in encrypted form.

13. The method of one of claims 1 to 12, including a step during which a user defines on a server (1) the television channels (C1, C2) to which he has access.

14. The method of one of claims 1 to 13, wherein said programming instructions are transmitted via Internet to digital recorders (5, 7) directly connected to an Internet-type network (3).

15. The method of one of claim 1 to 14, wherein said programming instructions are transmitted to at least one gateway (8) at a cable operator that includes them in the video signal transmitted to the users.

16. The method of one of claims 1 to 15, including a step of adding advertising content associated to at least some recorded video contents.

17. A server (1) for programming video recorders, comprising :
An electronic program guide:
A database (10) for storing a list of themes grouping indications of video content and the user rights associated to these indications of video content;
An interface (11) enabling the users to remotely modify the lists of themes and associated rights;
A module (12) for automatically transmit programming instructions of video recorders in order to initiate the automatic recording of the video contents in each theme to the users who benefit the corresponding rights, without intervention of said users.
A web server allowing sending to the video recorders command of deletion recording;
**characterized in that**
said web server allowing to users to define rules for management of the available memory in their recorders and allowing sending to these video recorders command of deletion recording when one of said rules is satisfied, in such a way as to allow deleting the least often consulted video contents and/or the most poorly video contents rated by the users of the theme.
